# FASCICULE DE BREVET EUROPEEN

(11) **EP 1 666 302 B1**
(45) Date de publication et mention de la délivrance du brevet: **26.03.2008**
(21) Numéro de dépôt: 05300949.4
(22) Date de dépôt: 18.11.2005
(51) Int. Cl.: B60N 2/46

(54) **Accoudoir escamotable pour véhicules automobiles**
Umstellbare Armlehne für Kraftfahrzeuge
Retractable armrest for automotive vehicles.

(30) Priorité: 01.12.2004 FR 0452823
(43) Date de publication de la demande: 07.06.2006
(73) Titulaire: Peugeot Citroen Automobiles SA, 78140 Vélizy-Villacoublay (FR)
(72) Inventeur: Bonnot, David, 91190 Gif sur Yvette (FR); Petit, Mathieu, 92150 Suresnes (FR)
(74) Mandataire: Fernandez, Francis Lionel

(56) Documents cités:
- DE-A1- 3 626 897
- DE-A1- 4 002 242
- DE-C- 586 562
- FR-A- 1 043 146
- FR-A- 1 518 824
- FR-A- 2 813 565
- US-A- 1 674 205
- US-A- 1 719 716
- US-A- 3 038 757
- US-A- 3 489 457
- US-A- 6 145 919

## Description

La présente invention a pour objet un accoudoir escamotable destiné à être fixé sur la paroi intérieure d'une porte de véhicule automobile. Lorsque la porte est coulissante, l'accoudoir se replie automatiquement à l'ouverture de la porte et se déploie automatiquement à la fermeture.

Les accoudoirs des véhicules automobiles forment des protubérances à l'intérieur de l'habitacle et de ce fait présentent des risques de blessures pour le conducteur et les passagers en cas d'accident. C'est notamment le cas lors d'un choc latéral. Il est donc important de proposer des solutions qui diminuent ou suppriment les risques de tels accidents.

Avec la demande croissante de véhicules automobiles du type monospace, les véhicules sont de plus en plus souvent équipés de portes coulissantes. Ces portes présentent de nombreux avantages parmi lesquels on peut citer une ouverture généralement supérieure par rapport aux portes classiques à charnières et donc un accès plus aisé à l'habitacle.

Cependant, afin de faciliter leur ouverture, les portes coulissantes ne sont habituellement pas munies d'accoudoirs du fait de leur encombrement ou, lorsqu'ils existent, leur largeur est très faible ce qui nuit au confort des passagers. La présence d'accoudoirs confortables, donc de largeur suffisante, imposerait un décalage relativement important de la porte en position d'ouverture, ce qui nécessiterait un renforcement coûteux du mécanisme de soutien et d'ouverture de la porte coulissante.

Une solution à ce problème est décrite dans la demande de brevet français n° FR-A-2813565 déposée le 7 septembre 2000 par la Demanderesse. Un accoudoir escamotable est monté pivotant sur la paroi intérieure de la porte coulissante. L'accoudoir peut prendre une position escamotée dans laquelle il est appliqué contre la paroi intérieure de la porte et une position déployée dans laquelle il s'étend perpendiculairement à la paroi intérieure. A l'ouverture de la porte, l'accoudoir est automatiquement escamoté. Cependant, à la fermeture de la porte, l'accoudoir ne se déploie pas automatiquement. Il est nécessaire, pour le déployer après fermeture de la porte, de le saisir et de l'amener manuellement dans sa position déployée. Cette manoeuvre provoque inévitablement une usure de l'accoudoir à l'endroit où il est habituellement saisi. De plus, la présence d'un tel accessoire n'est pas toujours évidente pour les passagers occasionnels.

Lorsqu'il est en position déployé, l'accoudoir ne peut être replié qu'en effectuant un geste bien précis, c'est-à-dire en saisissant le bord de l'accoudoir et en le déplaçant en exerçant une force de bas en haut. Tout autre effort appliqué sur l'accoudoir est sans effet, l'accoudoir restant en position déployée, ce qui constitue un risque de blessure pour le conducteur ou les passagers en cas d'accident. C'est notamment le cas lors d'un choc latéral.

Du document US 6145 919 A, qui est considéré comme état de l'art antérieur le plus proche, on connaît un accoudoir escamotable, destiné à être fixé sur la paroi intérieure d'une porte coulissante d'automobile, comprenant un élément d'appui se déplaçant automatiquement entre une position déployée et une position rétractée lorsque ladite porte coulissante est respectivement fermée et ouverte.

Le but de l'invention est de pallier ces inconvénients en proposant un accoudoir escamotable qui se replie lorsqu'il subit un effort latéral. De plus, lorsque la porte est coulissante, l'accoudoir se déploie et se replie automatiquement, respectivement à la fermeture et à l'ouverture de la porte. Le système est relié mécaniquement à la cinématique d'ouverture et de fermeture de la porte et ne nécessite donc aucune intervention de la part du passager.

De façon plus précise, l'invention propose un accoudoir escamotable destiné à être fixé sur la paroi interne d'une porte d'automobile. L'accoudoir comporte un élément d'appui monté pivotant autour d'un arbre entre une position déployée et une position rétractée et des moyens de passage dudit élément d'appui de la position déployée vers la position rétractée sous l'effet d'un effort latéral sur ledit élément.

Selon un mode de réalisation avantageux, lesdits moyens de passage de la position déployée vers la position rétractée comportent des moyens élastiques pour solidariser et désolidariser ledit élément d'appui avec ledit arbre.

Selon une forme de réalisation, lesdits moyens élastiques comportent une patte de maintien solidaire dudit arbre et un ressort reliant d'une part l'élément d'appui et d'autre part la patte de maintien. De façon avantageuse, cette patte de maintien a la forme d'un "U" dont l'une des jambes comporte un épaulement et dont l'autre jambe est maintenue en contact avec un ergot fixé sur l'élément d'appui. Le ressort a la forme de la lettre grecque a entourant ledit arbre, l'une des deux extrémités du ressort s'appuyant sur ledit ergot et l'autre extrémité s'appuyant sur ledit épaulement.

L'élément d'appui a avantageusement la forme d'une tablette pivotant autour dudit arbre le long d'un de ses deux bords longitudinaux, l'arbre et le bord longitudinal opposé à l'arbre étant sensiblement contenus dans un plan incliné par rapport à un plan horizontal. De préférence, le plan incliné forme un angle supérieur à 9° par rapport à un plan horizontal et le bord opposé à l'arbre a une forme arrondie.

Selon un mode de réalisation, l'accoudoir comporte des moyens élastiques de rappel de l'élément d'appui en position rétractée, avantageusement constitués par un ressort à lame monté solidaire de l'arbre, l'extrémité de la lame étant maintenue solidaire de la paroi intérieure de la porte.

Lorsque la porte est coulissante, l'élément d'appui est monté pivotant automatiquement entre ladite position déployée et ladite position rétractée lorsque la porte coulissante est respectivement fermée et ouverte et l'accoudoir comporte des moyens de déploiement et de maintien de l'élément d'appui en position déployée.

Selon un mode de réalisation préféré, lesdits moyens de déploiement et de maintien comportent une patte de basculement solidaire de l'arbre. Cette patte vient en appui contre une butée fixée à la caisse de l'automobile avant la fermeture complète de la porte et, au fur et à mesure de cette fermeture, la patte de basculement passe d'une première position, pour laquelle l'élément d'appui est en position rétractée, sensiblement verticale, à une deuxième position pour laquelle l'élément d'appui est en position déployée, sensiblement horizontale.

D'autres caractéristiques et avantages de l'invention ressortiront de la description suivante, donnée uniquement à titre d'exemple et faite en référence aux dessins annexés sur lesquels :
- les figures 1 et 2 illustrent en perspective un mode de réalisation d'un accoudoir escamotable, monté sur une porte coulissante, dans la position respectivement déployée (figure 1) et rétractée (figure 2);
- les figures 3 et 4 montrent des détails de réalisation;
- les figures 5A et 5B représentent une vue de coté des moyens élastiques permettant de solidariser/désolidariser l'élément d'appui, respectivement en position embrayée (figure 5A) et débrayée (figure 5B);
- les figures 6A et 6B représentent schématiquement la cinématique du mode de réalisation illustré sur les figures précédentes, la porte étant ouverte et l'élément d'appui relevé (figure 6A), puis la porte étant fermée et l'élément d'appui abaissé (figure 6B).

Le mode de réalisation qui va être décrit concerne un accoudoir fixé sur une porte coulissante d'un véhicule automobile, l'élément d'appui étant monté pivotant automatiquement entre une position déployée et une position rétractée lorsque la porte coulissante est respectivement fermée et ouverte. Cependant, l'invention peut également concerner des accoudoirs montés sur des portes à charnières et/ou ne pas inclure ce mécanisme automatique de déploiement et de repliement automatique de l'élément d'appui.

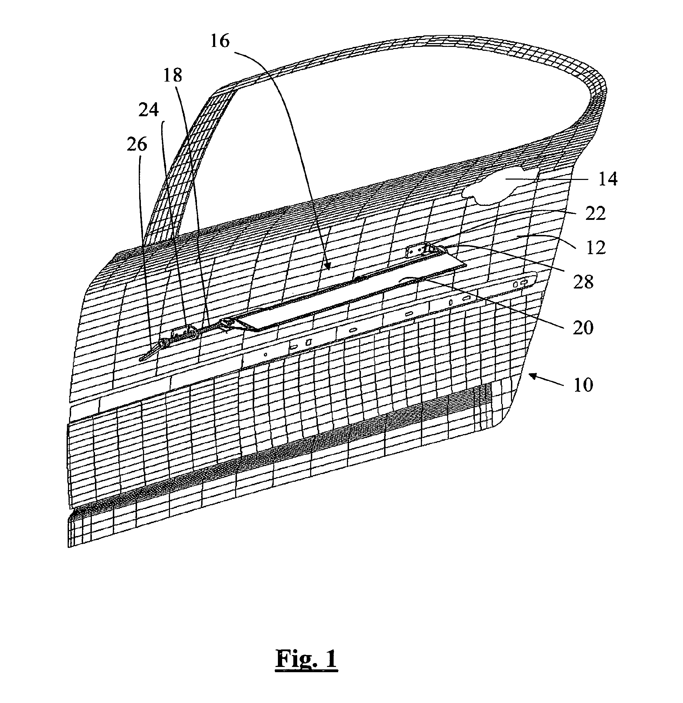

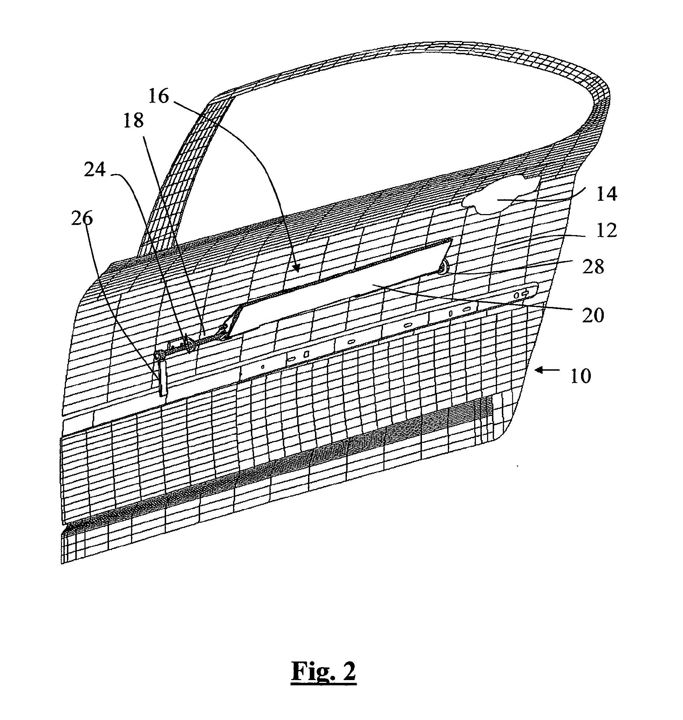

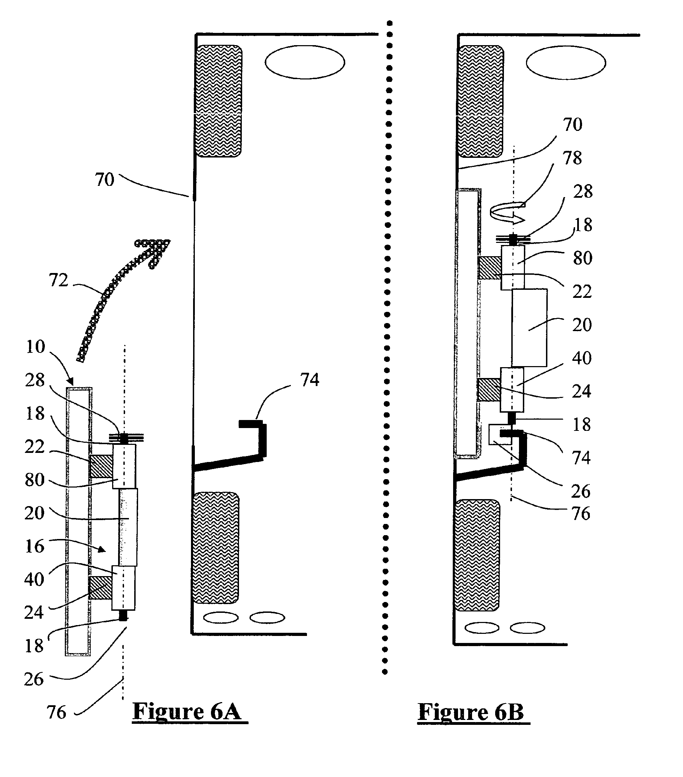

Sur les figures 1 et 2, une porte coulissante 10, dont la paroi intérieure 12 est représentée sans sa garniture, comporte de façon classique une structure métallique ou "caisson" et un espace 14 pour loger une poignée intérieure. Un accoudoir 16 est constitué principalement d'un arbre 18, d'un élément d'appui 20 destiné à recevoir le coude ou l'avant-bras du conducteur ou du passager et monté pivotant autour de cet arbre, de deux supports 22 et 24 de l'arbre 18 fixés sur la paroi intérieure 12 de la porte, d'une patte de basculement 26 fixée à l'une des deux extrémités de l'arbre 18 et d'un ressort à lame 28 fixé à l'autre extrémité dudit arbre. L'arbre 18 est destiné à être monté sensiblement horizontalement et parallèle à l'axe longitudinal du véhicule. Sur la figure 1, l'élément d'appui 20 est en position déployée, sensiblement horizontale, la patte de basculement 26 étant inclinée par rapport à la verticale. Sur la figure 2, l'élément d'appui 20 est en position rétractée, sensiblement parallèle à la paroi interne de la porte 10, la patte de basculement 26 étant elle aussi sensiblement parallèle à la paroi interne de la porte 10. La patte de basculement 26 permet de maintenir l'élément d'appui 20 en position déployée lorsqu'elle coopère avec une butée fixe (74 sur les figures 6A et 6B) de la paroi intérieure 12 de la porte.

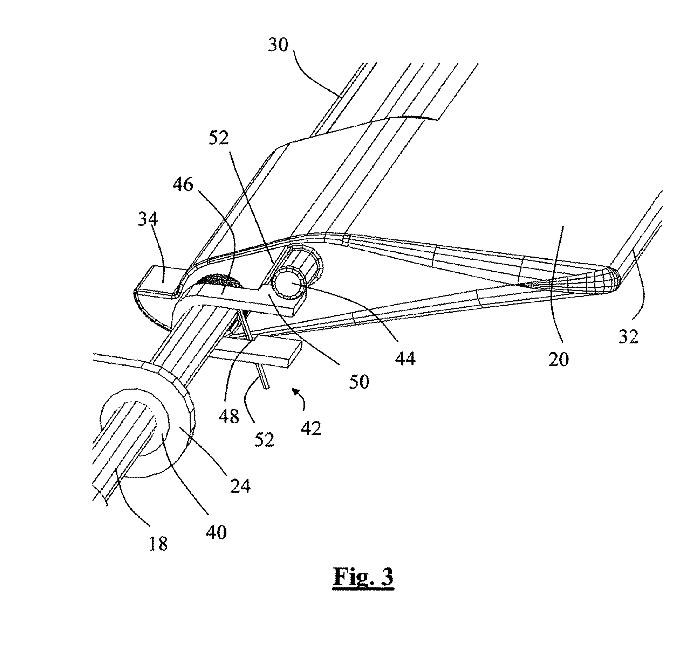

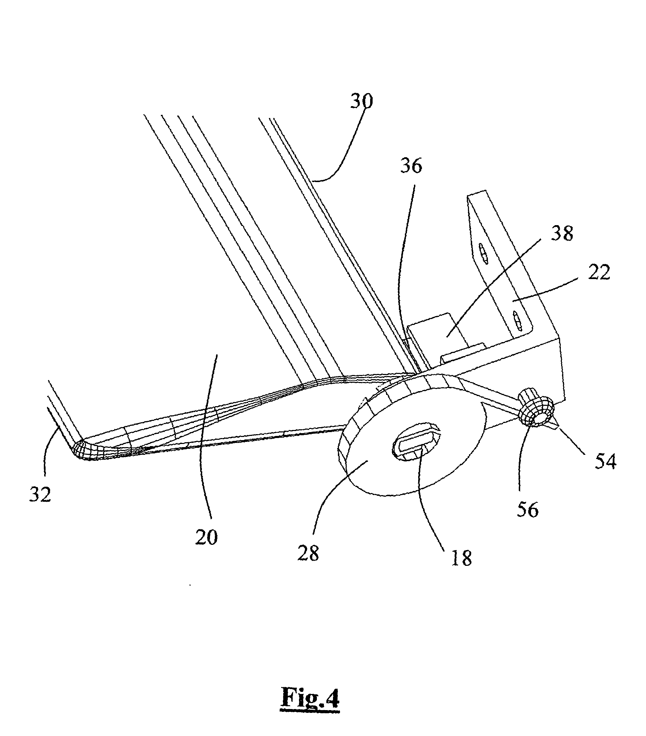

L'élément d'appui 20 a la forme d'une tablette approximativement rectangulaire avec deux bords latéraux 30 et 32 (voir figures 3 et 4). La tablette est montée pivotante autour de l'arbre 18, le long du bord 30. L'épaisseur de la tablette est plus grande vers le bord longitudinal 30 et va en diminuant progressivement en se rapprochant du bord latéral 32. L'élément d'appui 20 est muni de deux épaulements 34 et 36 qui coopèrent, en position déployée, avec deux butées (non représentée sur la figure 3 et référence 38 sur la figure 4) fixées sur la paroi intérieure 12 de la porte 10.

Les supports 24 et 26 comportent chacun un palier 40 (figures 3 et 6) et 80 (figures 6) permettant à l'arbre 18 de pivoter dans les supports.

Sur la figure 3, des moyens élastiques 42 permettent de solidariser et de désolidariser l'élément d'appui 20 avec l'arbre 18. Ces moyens comprennent un ergot 44 fixé sur le coté de l'élément d'appui 20 et d'une patte de maintien 46 en forme de "U", fixée sur l'arbre 18, munie d'un épaulement 48 sur l'une des deux jambes du "U", l'autre jambe 50 étant en contact avec l'ergot 44. Les moyens élastiques comprennent également un ressort 52 ayant la forme de la lettre grecque a. Le ressort 52 est fixé autour de l'arbre 18. L'une de ses deux extrémités prend appui sur l'ergot 44 et l'autre extrémité prend appui sur l'épaulement 48.

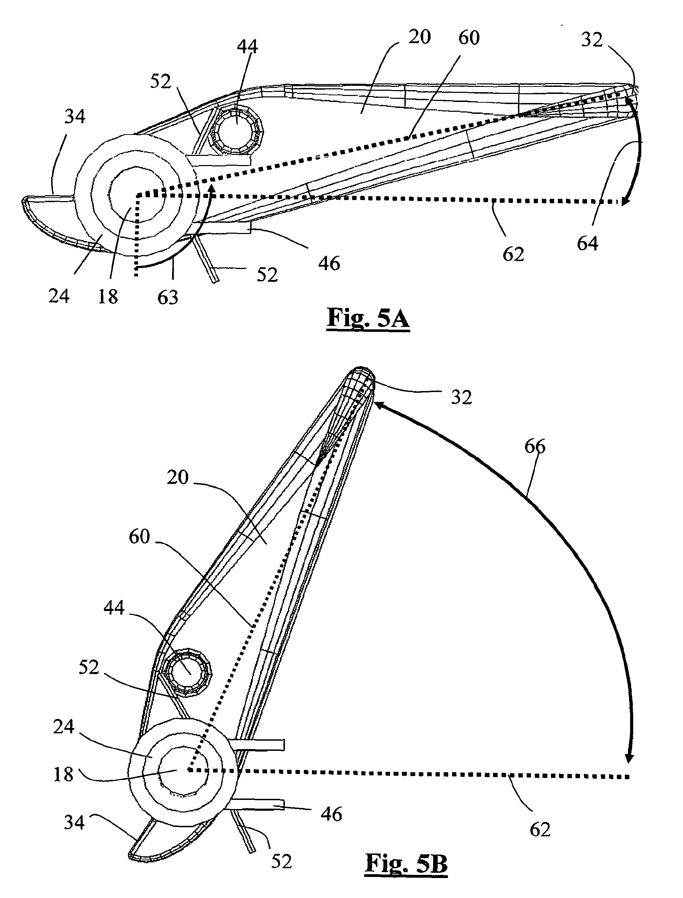

Le fonctionnement de l'accoudoir est le suivant. Le ressort 52 solidarise de façon élastique l'élément d'appui 20 avec l'arbre 18. Le mouvement de l'élément d'appui 20, qui est monté pivotant autour de l'arbre 18, est lié à celui de l'arbre 18 par la patte de maintien 46 et par le ressort 50. En partant de la position déployée de l'élément d'appui 20, comme sur les figures 3 et 5A, l'arbre 18 en tournant en sens contraire des aiguilles d'une montre entraîne la rotation de la patte de maintien 46, lequel entraîne la rotation de l'élément d'appui 20 puisque l'extrémité 50 de la patte de maintien est en butée sur l'ergot 44. L'élément d'appui 20 passe donc vers la position repliée, sensiblement verticale, jusqu'à ce que l'élément d'appui vienne en contact avec la paroi intérieure 12 de la porte. En sens contraire, lorsque l'arbre 18 tourne dans le sens des aiguilles d'une montre, la patte de maintien 46 tourne également, en entraînant l'élément d'appui 20 puisque l'ergot 44 est maintenu en contact de l'extrémité 50 de la patte de maintien 46 par le ressort 52. L'élément d'appui passe donc de la position repliée à la position déployée, correspondant au contact des épaulements 34 et 36 avec leurs butées respectives (butée 38 pour l'épaulement 36).

Comme représenté sur la figure 4, des moyens élastiques, sous forme du ressort à lame 28, tendent à maintenir l'élément d'appui en position repliée. Le ressort 28 est fixé à l'extrémité de l'arbre 18, l'extrémité de sa lame 54 étant immobilisée par un ergot 56 fixé sur le support 22, lui-même fixé sur la paroi intérieure de la porte. La représentation du ressort 28 sur la figure 4 correspond à sa contrainte maximale.

Les figures 5A et 5B sont des vues de coté de l'accoudoir et illustrent le principe de fonctionnement en cas de choc latéral. Selon une caractéristique de l'invention, lorsque l'élément d'appui 20 est en position déployée (figure 5A), le bord latéral 32 de l'élément d'appui 20 et l'arbre 18 sont situés sensiblement dans un même plan, représenté par le trait en pointillés 60, ce plan étant incliné par rapport à un plan horizontal représenté par le trait en pointillés 62. L'angle d'inclinaison 64 est supérieur à quelques degrés, de préférence voisin de 10 degrés. Lorsqu'un effort latéral est appliqué sur le bord latéral 32, en cas de choc latéral par exemple, l'élément d'appui 20 tourne autour de l'arbre 18, contre l'action exercée par le ressort 52 (figure 5B). Par effort latéral on entend toute force s'exerçant sur le bord longitudinal 32 selon un angle 63 inférieur à la valeur de l'angle 64 plus 90°, l'angle 63 étant mesuré (figure 5A) à partir de la verticale, en partant de la position six heures de l'aiguille des heures d'une montre et dans le sens inverse du mouvement de l'aiguille. L'élément d'appui se déplace vers sa position repliée jusqu'à atteindre un angle 66 qui correspond à une position repliée qui ne présente plus de danger de blessures pour le passager ou le conducteur, par exemple voisin de 66 degrés comme illustré sur la figure 5B. Cet angle dépend de la valeur de l'angle 64 (position déployée) et des caractéristiques du ressort 52. Plus la valeur de l'angle 64 est élevée, plus l'élément d'appui 20 pivote facilement autour de l'arbre 18 en cas de choc latéral.

La cinématique du déploiement et du repliement automatique de l'accoudoir est illustrée sur les figures 6A et 6B, l'accoudoir étant monté sur la porte coulissante 10 d'un véhicule automobile.

Sur la figure 6A, la porte 10 est en position complètement ouverte et s'étend parallèlement au coté de la caisse 70 du véhicule. L'élément d'appui 20 est en position rétractée, maintenu dans cette position , d'une part, par le ressort de rappel 28 agissant sur l'axe 18 et, d'autre part, par les moyens élastiques 42 solidarisant l'élément d'appui 20 à l'arbre 18. La patte de basculement 26, fixée à l'extrémité de l'arbre 18 et formant balancier, est sensiblement verticale.

Pour fermer la porte 10, on la déplace dans le sens de la flèche 72 sur des rails (non représentés) portés par la caisse du véhicule, jusqu'à atteindre la position de fermeture illustrée sur la figure 6B. Au cours de ce déplacement, la patte de basculement 26 se positionne d'abord en regard d'une butée 74 solidaire de la caisse 70 du véhicule. La porte 10 se ferme complètement en effectuant un mouvement latéral, vers l'intérieur du véhicule. La patte de basculement 26 vient alors en contact avec la butée fixe 74, puis tourne autour de l'axe 76 qui est l'axe de rotation de l'arbre 18. La patte de basculement 26 étant fixée à l'arbre 18, ce dernier tourne également dans les paliers 40 et 80, dans le sens de la flèche 78, provoquant le pivotement de l'élément d'appui 20 jusqu'à atteindre la position déployée lorsque la porte du véhicule est complètement fermée.

En sens inverse, au début de l'ouverture de la porte, la patte de basculement 26 s'éloigne et se désolidarise de la butée 74. Sous l'effet du ressort de rappel 28, l'arbre 18 pivote dans les paliers 40 et 80, approximativement d'un quart de tour, dans le sens contraire de la flèche 78, en entraînant l'élément d'appui 18. Ce dernier retrouve alors sa position rétractée de la figure 6A. On remarque que le déploiement et le repliement de l'accoudoir s'effectuent automatiquement respectivement lors de l'ouverture et de la fermeture de la porte, indépendamment du mode d'ouverture, manuel ou électrique.

Dans le mode de réalisation décrit, le maintien de l'élément d'appui 20 en position déployée est assuré par la patte de basculement 26 lorsqu'elle vient au contact de la butée 74. Pour une porte à charnières, l'élément d'appui 20 peut rester constamment en position déployée, que la porte soit ouverte ou fermée. Pour cela, la patte de basculement 26, la butée 74 et le ressort de rappel ne sont plus nécessaires et la possibilité de rotation de l'arbre 18 est supprimée. Cette simplification n'empêche pas qu'en cas de choc latéral, l'élément d'appui 20 peut basculer vers sa position rétractée grâce aux moyens élastiques 42 (figure 3) solidarisant et désolidarisant l'arbre 18 et l'élément d'appui 20. Ce basculement est favorisé par l'angle d'inclinaison 64 (figure 5).

## Revendications

1. Accoudoir escamotable (16) destiné à être fixé sur la paroi intérieure (12) d'une porte coulissante (10) d'automobile, comportant un élément d'appui (20) monté pivotant autour d'un arbre (18) entre une position déployée et une position rétractée et des moyens (42) de passage dudit élément d'appui de la position déployée vers la position rétractée sous l'effet d'un effort latéral sur ledit élément d'appui, ledit élément d'appui (20) pivotant automatiquement entre ladite position déployée et ladite position rétractée lorsque ladite porte coulissante est respectivement fermée et ouverte, et ledit accoudoir comportant des moyens de déploiement et de maintien (26, 74) dudit élément d'appui en position déployée.

2. Accoudoir escamotable selon la revendication 1, **caractérisé en ce que** lesdits moyens de passage (42) comportent des moyens élastiques (52) pour solidariser et désolidariser ledit élément d'appui (20) avec ledit arbre(18).

3. Accoudoir escamotable selon la revendication 2, **caractérisé en ce que** lesdits moyens élastiques comportent une patte de maintien (46) solidaire dudit arbre et un ressort (52) reliant d'une part ledit élément d'appui et d'autre part ladite patte de maintien.

4. Accoudoir escamotable selon la revendication 3, **caractérisé en ce que** ladite patte de maintien (46) a la forme d'un "U" dont l'une des jambes comporte un épaulement (48) et dont l'autre jambe (50) est maintenue en contact avec un ergot (44) fixé sur ledit élément d'appui et **en ce que** ledit ressort (52) a la forme de la lettre grecque α entourant ledit arbre, l'une des deux extrémités du ressort s'appuyant sur ledit ergot (44) et l'autre extrémité s'appuyant sur ledit épaulement (48).

5. Accoudoir escamotable selon l'une des revendications 2 à 4, **caractérisé en ce que** ledit élément d'appui (20) a la forme d'une tablette (20) pivotant autour dudit arbre (18) le long d'un (30) de ses deux bords longitudinaux, ledit arbre et le bord longitudinal (32) opposé audit arbre étant sensiblement contenus dans un plan (60) incliné par rapport à un plan horizontal (62) lorsque l'élément d'appui (20) est en position deployée.

6. Accoudoir escamotable selon la revendication 5, **caractérisé en ce que** ledit plan incliné (60) forme un angle supérieur à 9° par rapport à un plan horizontal.

7. Accoudoir escamotable selon l'une des revendications 5 et 6, **caractérisé en ce que** ledit bord (32) opposé audit arbre a une forme arrondie.

8. Accoudoir escamotable selon l'une des revendications précédentes, **caractérisé en ce qu**'il comporte des moyens élastiques (28) de rappel dudit élément d'appui en position rétractée.

9. Accoudoir escamotable selon la revendication 8, **caractérisé en ce que** lesdits moyens élastiques comportent un ressort à lame (28) monté solidaire dudit arbre, l'extrémité (54) de ladite lame étant maintenue solidaire de ladite paroi intérieure de ladite porte.

10. Accoudoir escamotable selon l'une des revendications précédentes, **caractérisé en ce que** ledit élément d'appui (20) comporte au moins un épaulement (34, 36) coopérant avec une butée (38) montée sur ladite paroi intérieure (12) de ladite porte.

11. Accoudoir escamotable selon l'une des revendications précédentes, **caractérisé en ce qu'**il comporte un support (22, 24) dudit arbre muni de deux paliers (40, 80) dans lesquels pivote ledit arbre, ledit support étant destiné à être fixé à ladite paroi intérieure (12) de ladite porte.

12. Accoudoir escamotable selon la revendication 1, **caractérisé en ce que** lesdits moyens de déploiement et de maintien comportent une patte de basculement (26) solidaire dudit arbre (18), et **en ce que** ladite patte vient en appui contre une butée (74) fixée à la caisse (12) de la porte avant la fermeture complète de la porte et, au fur et à mesure de cette fermeture, ladite patte (26) passe d'une première position, pour laquelle ledit élément d'appui (20) est en position rétractée, sensiblement verticale, à une deuxième position pour laquelle ledit élément d'appui (20) est en position déployée, sensiblement horizontale.

## Claims

1. Retractable armrest (16) intended to be fixed to the interior wall (12) of an automobile sliding door (10), comprising a bearing element (20) mounted pivoting about a shaft (18) between a deployed position and a retracted position and means (42) for passage of the said bearing element from the deployed position to the retracted position under the effect of a lateral loading on the said bearing element, the said bearing element (20) pivoting automatically between the said deployed position and the said retracted position when the said sliding door is respectively closed and opened, and the said armrest comprising means (26, 74) for deployment and holding of the said bearing element in the deployed position.

2. Retractable armrest according to Claim 1, **characterized in that** the said passage means (42) comprise elastic means (52) for fastening and unfastening the said bearing element (20) to the said shaft (18).

3. Retractable armrest according to Claim 2, **characterized in that** the said elastic means comprise a holding lug (46) secured to the said shaft and a spring (52) linking on the one hand the said bearing element and on the other hand the said holding lug.

4. Retractable armrest according to Claim 3, **characterized in that** the said holding lug (46) has the form of a "U" one of whose legs comprises a shoulder (48) and whose other leg (50) is held in contact with a stud (44) fixed to the said bearing element and **in that** the said spring (52) has the form of the Greek letter α surrounding the said shaft, one of the two ends of the spring bearing on the said stud (44) and the other end bearing on the said shoulder (48).

5. Retractable armrest according to one of Claims 2 to 4, **characterized in that** the said bearing element (20) has the form of a shelf (20) pivoting about the said shaft (18) along one (30) of its two longitudinal edges, the said shaft and the longitudinal edge (32) opposite from the said shaft being substantially contained in a plane (60) inclined with respect to a horizontal plane (62) when the bearing element (20) is in the deployed position.

6. Retractable armrest according to Claim 5, **characterized in that** the said inclined plane (60) forms an angle of greater than 9° with respect to a horizontal plane.

7. Retractable armrest according to one of Claims 5 and 6, **characterized in that** the said edge (32) opposite from the said shaft has a rounded form.

8. Retractable armrest according to one of the preceding claims, **characterized in that** it comprises elastic means (28) for restoring the said bearing element to the retracted position.

9. Retractable armrest according to Claim 8, **characterized in that** the said elastic means comprise a leaf spring (28) mounted secured to the said shaft, the end (54) of the said leaf being held secured to the said interior wall of the said door.

10. Retractable armrest according to one of the preceding claims, **characterized in that** the said bearing element (20) comprises at least one shoulder (34, 36) cooperating with an abutment (38) mounted on the said interior wall (12) of the said door.

11. Retractable armrest according to one of the preceding claims, **characterized in that** it comprises a support (22, 24) of the said shaft furnished with two bearings (40, 80) in which the said shaft pivots, the said support being intended to be fixed to the said interior wall of the said door.

12. Retractable armrest according to Claim 1, **characterized in that** the said deployment and holding means comprise a toggling lug (26) secured to the said shaft (18), and **in that** the said lug bears against an abutment (74) fixed to the shell (12) of the door before the complete closure of the door and, in tandem with this closure, the said lug (26) passes from a first position, for which the said bearing element (20) is in the, substantially vertical, retracted position, to a second position for which the said bearing element (20) is in the, substantially horizontal, deployed position.

## Patentansprüche

1. Einklappbare Armlehne (16), die dazu bestimmt ist, an der Innenwand (12) einer Kraftfahrzeugschiebetür (10) befestigt zu werden, umfassend ein Stützelement (20), das schwenkbar um eine Welle (18) zwischen einer ausgefahrenen Position und einer eingezogenen Position montiert ist, und Mittel (42) für den Übergang des Stützelements von der ausgefahrenen Position in die eingezogene Position unter der Wirkung einer seitlichen Kraft auf das Stützelement, wobei das Stützelement (20) automatisch zwischen der ausgefahrenen Position und der eingezogenen Position schwenkt, wenn die Schiebetür geschlossen bzw. geöffnet wird, wobei die Armlehne Mittel zum Ausfahren und Halten (26, 74) des Stützelements in der ausgefahrenen Position umfasst.

2. Einklappbare Armlehne nach Anspruch 1, **dadurch gekennzeichnet, dass** die Übergangsmittel (42) elastische Mittel (52) umfassen, um das Stützelement (20) mit der Welle (18) zu verbinden und von dieser zu lösen.

3. Einklappbare Armlehne nach Anspruch 2, **dadurch gekennzeichnet, dass** die elastischen Mittel eine Halteklaue (46), die mit der Welle verbunden ist, und eine Feder (52) umfassen, die einerseits das Stützelement und andererseits die Halteklaue verbindet.

4. Einklappbare Armlehne nach Anspruch 3, **dadurch gekennzeichnet, dass** die Halteklaue (46) die Form eines "U" hat, dessen einer Schenkel einen Absatz (48) umfasst und dessen anderer Schenkel (50) mit einem Haken (44) in Kontakt gehalten wird, der auf dem Stützelement befestigt ist, und dass die Feder (52) die Form des griechischen Buchstaben α hat und die Welle umgibt, wobei eines der beiden Enden der Feder auf dem Haken (44) aufliegt und das andere Ende auf dem Absatz (48) aufliegt.

5. Einklappbare Armlehne nach einem der Ansprüche 2 bis 4, **dadurch gekennzeichnet, dass** das Stützelement (20) die Form einer Platte (20) hat, die um die Welle (18) entlang eines (30) ihrer Längsränder schwenkt, wobei die Welle und der der Welle gegenüberliegende Längsrand (32) im Wesentlichen in einer Ebene (60) enthalten sind, die zu einer Horizontalebene (62) geneigt ist, wenn das Stützelement (20) in der ausgefahrenen Position ist.

6. Einklappbare Armlehne nach Anspruch 5, **dadurch gekennzeichnet, dass** die geneigte Ebene (60) einen Winkel größer als 9° zur Horizontalebene bildet.

7. Einklappbare Armlehne nach einem der Ansprüche 5 und 6, **dadurch gekennzeichnet, dass** der der Welle gegenüberliegende Rand (32) eine abgerundete Form hat.

8. Einklappbare Armlehne nach einem der vorhergehenden Ansprüche, **dadurch gekennzeichnet, dass** sie elastische Mittel (28) zur Rückstellung des Stützelements in die eingezogene Position umfasst.

9. Einklappbare Armlehne nach Anspruch 8, **dadurch gekennzeichnet, dass** die elastischen Mittel eine Blattfeder (28) umfassen, die mit der Welle in Verbindung montiert ist, wobei das Ende (54) des Blattes mit der Innenwand der Tür in Verbindung gehalten wird.

10. Einklappbare Armlehne nach einem der vorhergehenden Ansprüche, **dadurch gekennzeichnet, dass** das Stützelement (20) mindestens einen Absatz (34, 36) umfasst, der mit einem Anschlag (38) zusammenwirkt, der an der Innenwand (12) der Tür montiert ist.

11. Einklappbare Armlehne nach einem der vorhergehenden Ansprüche, **dadurch gekennzeichnet, dass** sie eine Stütze (22, 24) der Welle, die mit zwei Lagern (40, 80) versehen ist, in denen die Welle schwenkt, umfasst, wobei die Stütze dazu bestimmt ist, an der Innenwand (12) der Tür befestigt zu werden.

12. Einklappbare Armlehne nach Anspruch 1, **dadurch gekennzeichnet, dass** die Mittel zum Ausfahren und Halten ein Kippelement (26), das mit der Welle (18) verbunden ist, umfassen, und dass das Element an einem Anschlag (74), der am Rahmen (12) der Tür befestigt ist, vor dem vollständigen Verschluss der Tür zur Anlage gelangt, und dass im Zuge dieses Verschließens das Element (26) von einer ersten Position, in der das Stützelement (20) in eingezogener im Wesentlichen vertikaler Position ist, in eine zweite Position übergeht, in der das Stützelement (20) in im Wesentlichen horizontaler ausgefahrener Position ist.
